# EUROPEAN PATENT SPECIFICATION

(11) **EP 4 169 983 B1**
(45) Date of publication and mention of the grant of the patent: **20.08.2025**
(21) Application number: 21834178.2
(22) Date of filing: 10.06.2021
(51) Int. Cl.: C08L 81/02, B29C 48/09, C08L 23/00, B29C 49/00

(54) **POLYARYLENE SULFIDE RESIN COMPOSITION FOR EXTRUSION OR BLOW MOLDING**
POLYARYLENSULFID-HARZZUSAMMENSETZUNG FÜR EXTRUSIONS- ODER BLASFORMEN
COMPOSITION DE RÉSINE DE SULFURE DE POLYARYLÈNE POUR MOULAGE PAR EXTRUSION OU PAR SOUFFLAGE

(30) Priority: 29.06.2020 JP 2020111337
(43) Date of publication of application: 26.04.2023
(73) Proprietor: Polyplastics Co., Ltd., Tokyo 108-8280 (JP)
(72) Inventor: ARAI Hiroki, Fuji-shi, Shizuoka 416-8533 (JP)
(74) Representative: Maiwald GmbH
(86) International application number: PCT/JP2021/022150
(87) International publication number: WO 2022/004327

(56) References cited:
- EP-A1- 1 630 200
- WO-A1-2019/106171
- WO-A1-2019/208708
- JP-A- 2005 502 982
- JP-A- 2017 155 221
- JP-A- 2019 183 077
- JP-A- 2019 183 156
- JP-A- 2020 056 007
- JP-A- H0 693 180
- JP-A- H06 329 905
- JP-A- H08 506 128

## Description

### [TECHNICAL FIELD]

The present invention relates to a polyarylene sulfide resin composition suitable for extrusion or blow molding.

### [BACKGROUND ART]

A polyarylene sulfide resin (hereafter also referred to as "PAS resin") represented by a polyphenylene sulfide resin (hereafter also referred to as "PPS resin") has high heat resistance, mechanical properties, chemical resistance, dimensional stability, and flame retardancy. Therefore, the PAS resin is widely used as an electrical and electronic equipment part material, an automotive equipment part material, a chemical equipment part material, and the like.

It has been desired for a PAS resin composition to be applied to a product such as a tube that can be produced by means of extrusion molding. However, a non-reinforced PAS resin composition that is not reinforced by using a filler such as glass fibers tends to be inferior in extrusion stability and moldability. In addition, the resulting molded article has not only a poor appearance but also has low toughness due to insufficient mechanical properties such as impact resistance and tensile elongation. Therefore, in the extrusion molding field, the use of non-reinforced molding materials has tended to be limited, and compositions having an added inorganic filler or the like have been the mainstream.

In order to improve impact resistance, tensile elongation, surface condition, and the like of the PAS resin composition without including an inorganic filler or the like, using an olefinic copolymer in combination has been proposed (see Patent Literature 1). However, the PAS resin composition disclosed in Patent Literature 1 has a problem of inferior extrusion moldability due to a high melt index and melt viscosity, and a problem of inferior flexibility. Specifically, if the polyarylene sulfide resin composition disclosed in Patent Literature 1 is used, there is a concern about the occurrence of cracking when a resin tube is pushed into a pipe joint such as a nipple to connect the tube and the pipe joint, and improvement in flexibility is required. Therefore, the applicant attempted to solve the above problems by using a specific olefinic copolymer containing an epoxy group in combination (see Patent Literature 2).

JP H06-329905A relates to a poly(arylene sulfide) resin mixed with an olefin copolymer (a) having glycidyl groups and with at least one thermoplastic resin selected from olefin copolymers other than the copolymer (a), acrylic rubbers, and hydrogenated conjugated-diene polymers. The copolymer (a) comprises 10-50wt.% units (1) derived from an alpha-olefin, 50-90wt.% units (2) derived from an alkyl ester of an alpha,beta-unsaturated carboxylic acid, and 0.5-30wt.% units derived from a glycidyl ester of an alpha,beta-unsaturated acid, with the sum of units (1) and (2) being 70-99.5wt.%.

JP H06-93180A discloses a resin composition comprising (A) a polyphenylene sulfide resin; (B) a linear olefin random copolymer composed of an alpha-olefin and an alkyl ester of an alpha,beta-unsaturated carboxylic acid, or further with an alpha,beta-unsaturated carboxylic acid or an anhydride thereof; and (C) at least one resin selected from among bisphenol S epoxy resins, 1,6-dihydroxy-naphthalene epoxy resins, epoxy olefin copolymers of an alpha-olefin, a glycidyl ester of an alpha,beta-unsaturated carboxylic acid and an alkyl ester of an alpha,beta-unsaturated carboxylic acid, and oxazoline copolymers having vinyloxyazoline units.

### [Citation List]

### [Patent Literature]

[Patent Literature 1] Japanese Unexamined Patent Application Publication No. Hei 6-179791
[Patent Literature 2] Japanese Unexamined Patent Application Publication No. 2019-183077

### [SUMMARY OF THE INVENTION]

### [PROBLEM TO BE SOLVED BY THE INVENTION]

Due to the PAS resin composition disclosed in Patent Literature 2, problems such as inferior extrusion moldability and flexibility were solved. However, if the PAS resin composition is applied to cooling piping and the like with a temperature of around -40 °C, sufficient toughness is not obtained, and there was still room for improvement.

Meanwhile, if an olefinic copolymer is used in combination with the PAS resin at random, there is a problem of the occurrence of a phenomenon in which poor dispersion causes the raw material to leak from a vent hole of an extruder during fabrication of resin pellets used for extrusion or blow molding. This phenomenon is referred to as venting-up. In addition, there is a problem of reduction in productivity because bulges occur on the surface of a molded article obtained by means of extrusion or blow molding.

The present invention has been devised in view of the above conventional problems, and an object of the present invention is to provide a polyarylene sulfide resin composition for extrusion or blow molding that has excellent toughness at low temperatures, suppresses venting-up during pellet fabrication performed by means of an extruder, and enables molding of a molded article having a good appearance.

### [MEANS FOR SOLVING THE PROBLEM]

The present invention has been devised based on the finding that if, in a PAS resin composition containing an olefinic copolymer containing an epoxy group, a specific olefinic copolymer not containing an epoxy group is used in combination at a specific proportion, it is possible to further enhance toughness at low temperatures while maintaining extrusion or blow moldability.

One aspect of the present invention to solve the above problems is as follows.

(1) A polyarylene sulfide resin composition for extrusion or blow molding including: (A) a polyarylene sulfide resin; (B) an olefinic copolymer containing an epoxy group; and (C) an olefinic copolymer not containing an epoxy group, as a resin component, in which a content of the resin component is 95 mass% or more, a total content of (B) the olefinic copolymer containing an epoxy group and (C) the olefinic copolymer not containing an epoxy group relative to 100 parts by mass of (A) the polyarylene sulfide resin is 33 to 55 parts by mass, and a content of (C) the olefinic copolymer not containing an epoxy group relative to 100 parts by mass of (A) the polyarylene sulfide resin is 5 to 20 parts by mass, and (B) the olefinic copolymer containing an epoxy group contains a constituent unit derived from an α-olefin, a constituent unit derived from a glycidyl ester of an α,β-unsaturated acid, and a constituent unit derived from a (meth)acrylic acid ester, and the number of carbons of an alcohol residue in the constituent unit derived from the (meth)acrylic acid ester is 2 to 20, and (C) the olefinic copolymer not containing an epoxy group contains a constituent unit derived from an α-olefin and a constituent unit derived from a (meth)acrylic acid ester, the number of carbons of an alcohol residue in the constituent unit derived from the (meth)acrylic acid ester is 2 to 20, and a content of the constituent unit derived from the (meth)acrylic acid ester relative to (C) the olefinic copolymer not containing an epoxy group is 30 to 40 mass%.
(2) The polyarylene sulfide resin composition for extrusion or blow molding according to (1) above, wherein a content of (C) the olefinic copolymer not containing an epoxy group relative to 100 parts by mass of (A) the polyarylene sulfide resin is 6 to 20 parts by mass.
(3) The polyarylene sulfide resin composition for extrusion or blow molding according to (1) or (2) above, in which (A) the polyarylene sulfide resin has a peak molecular weight of 50,000 or more, measured with a 0.05 mass% solution of the polyarylene sulfide resin in 1-chloronaphthalene by means of high-temperature gel permeation chromatography as the molecular weight of the peak top of the distribution of the molecular weight subjected to a standard polystyrene conversion.
(4) The polyarylene sulfide resin composition for extrusion or blow molding according to any one of (1) to (3) above, in which a notched Charpy impact strength measured at -40 °C in accordance with ISO 179/1eA is 25 kJ/m² or more.
(5) The polyarylene sulfide resin composition for extrusion or blow molding according to any one of (1) to (4) above, in which a tensile fracture nominal strain measured in accordance with ISO 527-1,2 is 20% or more.
(6) The polyarylene sulfide resin composition for extrusion or blow molding according to any one of (1) to (5) above, further including: one or more selected from the group consisting of an antioxidant, a mold release agent, a corrosion inhibitor, and a nucleating agent.
(7) The polyarylene sulfide resin composition for extrusion or blow molding according to any one of (1) to (6) above, wherein in the olefinic copolymer containing an epoxy group (B) the number of carbons of the alcohol residue in the constituent unit derived from the (meth)acrylic acid ester is 4 to 10.
(8) The polyarylene sulfide resin composition for extrusion or blow molding according to (7) above, wherein the olefinic copolymer not containing an epoxy group (C) is selected from ethylene-ethyl acrylate copolymer, ethylene-propyl acrylate copolymer, ethylene-butyl acrylate copolymer, ethylene-pentyl acrylate copolymer, ethylene-hexyl acrylate copolymer, ethylene-heptyl acrylate copolymer, or ethylene-octyl acrylate copolymer.

### [Effect of the Invention]

According to the present invention, it is possible to provide a polyarylene sulfide resin composition for extrusion or blow molding that has excellent toughness at low temperatures, suppresses venting-up during pellet fabrication performed by means of an extruder, and enables molding of a molded article having a good appearance.

### [MODES FOR CARRYING OUT THE INVENTION]

A polyarylene sulfide resin composition for extrusion or blow molding (hereafter also referred to as a "PAS resin composition") of the present embodiment contains, as resin components, (A) a PAS resin, (B) an olefinic copolymer containing an epoxy group, and (C) an olefinic copolymer not containing an epoxy group. The content of the resin component is 95 mass% or more. The total content of (B) the olefinic copolymer containing an epoxy group and (C) the olefinic copolymer not containing an epoxy group relative to 100 parts by mass of (A) the PAS resin is 33 to 55 parts by mass. The content of (C) the olefinic copolymer not containing an epoxy group relative to 100 parts by mass of (A) the PAS resin is 5 to 20 parts by mass. Further, (B) the olefinic copolymer containing an epoxy group contains a constituent unit derived from an α-olefin, a constituent unit derived from a glycidyl ester of an α,β-unsaturated acid, and a constituent unit derived from a (meth)acrylic acid ester. The carbon number of an alcohol residue in the constituent unit derived from the (meth)acrylic acid ester is 2 to 20. Furthermore, (C) the olefinic copolymer not containing an epoxy group contains a constituent unit derived from an α-olefin and a constituent unit derived from a (meth)acrylic acid ester. The carbon number of an alcohol residue in the constituent unit derived from the (meth)acrylic acid ester is 2 to 20. The content of the constituent unit derived from the (meth)acrylic acid ester relative to (C) the olefinic copolymer not containing an epoxy group is 30 to 40 mass%.

(B) The olefinic copolymer containing an epoxy group is highly compatible with the PAS resin, and, when used in combination with the PAS resin, extrusion or blow molding can be performed well, and they also contribute to the enhancement of toughness. In the present embodiment, in order to enhance toughness at low temperatures, while also using (C) the olefinic copolymer not containing an epoxy group, the content thereof is set within a specific range. Accordingly, it is possible to achieve toughness at low temperatures and excellent extrusion or blow moldability. Meanwhile, (C) the olefinic copolymer not containing an epoxy group alone has poor compatibility with the PAS resin and fails to enhance the toughness at low temperatures. In addition, due to poor dispersion, bulges occur on the surface of a molded article and venting-up occurs during pellet fabrication performed by using an extruder.

The toughness at low temperatures means that notched Charpy impact strength measured at -40 °C in accordance with ISO 179/1eA is 25 kJ/m² or more.

Each component of the PAS resin composition of the present embodiment will be described below.

### [(A) Polyarylene sulfide resin]

The PAS resin has excellent mechanical properties, electrical properties, heat resistance, and other physical and chemical properties, as well as good processability.

The PAS resin is a high polymer compound mainly composed of -(Ar-S)- (where Ar represents an arylene group) as a repeating unit. In the present embodiment, a PAS resin having a generally known molecular structure can be used.

Examples of the arylene group include a p-phenylene group, a m-phenylene group, a o-phenylene group, a substituted phenylene group, a p,p'-diphenylene sulfone group, a p,p'-biphenylene group, a p,p'-diphenylene ether group, a p,p'-diphenylene carbonyl group, and a naphthalene group. The PAS resin may be a homopolymer consisting only of the above repeating unit. There are cases where a copolymer containing the following heterologous repeating unit is preferable in terms of processability.

A preferably used homopolymer is a polyphenylene sulfide resin having, as a repeating unit, a p-phenylene sulfide group in which a p-phenylene group is used as an arylene group. Further, as the copolymer, the combination of two or more arylene sulfide groups composed of the arylene group can be used. Thereamong, the combination of the p-phenylene sulfide group and an m-phenylene sulfide group is particularly preferably used.

Among them, one containing 70 mol% or more, preferably 80 mol% or more, of the p-phenylene sulfide group is suitable from the viewpoint of physical properties such as heat resistance, moldability, and mechanical properties. Further, among these PAS resins, a high molecular weight polymer with a substantially linear structure obtained by means of condensation polymerization from a monomer consisting mainly of a bifunctional halogen aromatic compound can be particularly preferably used. The PAS resin used in the present embodiment may be a mixture of two or more PAS resins with different molecular weights.

In addition to the PAS resin having the linear structure, examples also include the following: a polymer in which, during condensation polymerization, a small amount of a monomer such as a polyhaloaromatic compound having three or more halogen substituents is used to form a branching or crosslinked structure partially; and a polymer in which a low-molecular weight polymer having a linear structure is heated at a high temperature in the presence of oxygen or the like and melt viscosity is increased by means of oxidative cross-linking or thermal cross-linking to enhance the molding processability.

The melt viscosity of the PAS resin as a base resin used in the present embodiment (310 °C, a shear rate of 1200 sec⁻¹) is 80 to 250 Pa·s from the viewpoint of the balance between mechanical properties and fluidity, including the case of the above mixed system. The melt viscosity of the PAS resin is preferably 90 to 200 Pa·s, more preferably 100 to 190 Pa·s, and particularly preferably 100 to 180 Pa·s.

Since the toughness at low temperatures is enhanced and it is easy to obtain a PAS resin composition that exhibits a desired tensile fracture nominal strain, the peak molecular weight of the PAS resin is preferably 50000 or more, and more preferably 55000 or more. In addition, the peak molecular weight of the PAS resin is preferably 100000 or less, and more preferably 80000 or less, from the viewpoint of having both the desired tensile fracture nominal strain and good extrusion or blow moldability.

The peak molecular weight of the PAS resin can be measured by means of high-temperature gel permeation chromatography as the molecular weight of the peak top of the distribution of the molecular weight subjected to a standard polystyrene conversion. In the high-temperature gel permeation chromatography, the measurement can be performed by using a device such as an SSC-7000 (UV detector, detection wavelength: 360 nm) manufactured by Senshu Scientific Co., Ltd. A sample for measurement can be fabricated by dissolving the PAS resin in 1-chloronaphthalene as a solvent at 230 °C for 10 minutes such that the concentration is 0.05 mass%. In addition, the peak molecular weight of the PAS resin can be adjusted by adjusting the polymerization condition when the the PAS resin is manufactured according to a well-known method.

The PAS resin composition of the present embodiment may contain, as resin components, other resin components in addition to the PAS resin described above to the extent that the effect is not impaired. Other resin components are not particularly limited and include a polyethylene resin, a polypropylene resin, a polyamide resin, a polyacetal resin, a modified polyphenylene ether resin, a polyethylene terephthalate resin, a polybutylene terephthalate resin, a polyethylene naphthalate resin, a polyimide resin, a polyamideimide resin, a polyetherimide resin, a polysulfone resin, a polyether sulfone resin, a polyether ketone resin, a polyether ether ketone resin, a liquid crystal resin, a fluorine resin, a cyclic olefin resin (a cyclic olefin polymer, a cyclic olefin copolymer, or the like), a thermoplastic elastomer, a silicone-based polymer, and various biodegradable resins. In addition, two or more resin components may be used together. Among them, a polyamide resin, a modified polyphenylene ether resin, a liquid crystal resin, and the like are preferably used from the viewpoint of mechanical properties, electrical properties, physical and chemical properties, processability, and the like.

### [(B) Olefinic copolymer containing an epoxy group]

In the present embodiment, (B) the olefinic copolymer containing an epoxy group contains the constituent unit derived from the α-olefin, the constituent unit derived from the glycidyl ester of an α,β-unsaturated acid, and the constituent unit derived from the (meth)acrylic acid ester. In addition, the carbon number of the alcohol residue in the constituent unit derived from the (meth)acrylic acid ester is 2 to 20. The olefinic copolymer containing an epoxy group can be used alone or a combination of two or more can be used.

Each constituent unit will be described below. Hereafter, a (meth)acrylic acid ester is also referred to as a (meth)acrylate. A (meth)acrylic acid glycidyl ester is also referred to as a glycidyl (meth)acrylate, for example. Further, in the present specification, a "(meth)acrylic acid" means both an acrylic acid and a methacrylic acid. The "(meth)acrylate" means both an acrylate and a methacrylate.

### (Constituent unit derived from α-olefin)

The α-olefin is not particularly limited and examples of the α-olefin include ethylene, propylene, butylene, 1-pentene, 1-hexene, 1-heptene, 1-octene, 4-methyl-1-pentene, 4-methyl-1-hexene, and the like. Among the above, ethylene is particularly preferred. The α-olefin may be used alone or a combination of two or more can be used. The content of the constituent unit derived from the α-olefin is not particularly limited but can be 40 to 98 mass% of (B) the olefinic copolymer containing an epoxy group, for example. By (B) the olefinic copolymer containing an epoxy group containing the constituent unit derived from the α-olefin as a copolymer component, flexibility is likely to be imparted to a resin member.

### (Constituent unit derived from glycidyl ester of α,β-unsaturated acid)

The glycidyl ester of an α,β-unsaturated acid is not particularly limited, and one having the structure shown by general formula (1) below can be taken as an example. 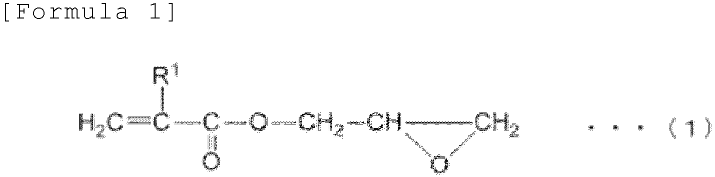 (Wherein, R¹ denotes an alkyl group in which the number of hydrogen atoms or carbon atoms is 1 or more and 10 or less.)

Examples of a compound represented by general formula (1) above include acrylic acid glycidyl ester, methacrylic acid glycidyl ester, ethacrylic acid glycidyl ester, and the like. Among the above, a methacrylic acid glycidyl ester is particularly preferred. The glycidyl ester of an α,β-unsaturated acid may be used alone or a combination of two or more can be used. The content ratio of the constituent unit derived from the glycidyl ester of an α,β-unsaturated acid relative to (B) the olefinic copolymer containing an epoxy group is preferably 3.0 to 12.0 mass% and more preferably 5.0 to 10.0 mass% from the viewpoint of enhancing fluidity. The content ratio of the constituent unit derived from the glycidyl ester of an α,β-unsaturated acid relative to (B) the olefinic copolymer containing an epoxy group when two or more compounds are used together is the content ratio of the constituent unit derived from the glycidyl ester of an α,β-unsaturated acid relative to the total amount of (B) the olefinic copolymer containing an epoxy group (B) after mixing.

### (Constituent unit derived from the (meth)acrylic acid ester)

In the (meth)acrylic acid ester of the present embodiment, the carbon number of the alcohol residue is 2 to 20. If the carbon number is less than 2, it becomes difficult to enhance toughness in a low-temperature environment, it is difficult to obtain a (meth)acrylic acid ester in which the carbon number of the alcohol residue is more than 20, and therefore, an increase in the cost of raw materials is caused. The carbon number is preferably 4 to 10 and more preferably 4 to 8. Examples of the (meth)acrylic acid ester include: acrylic acid esters such as ethyl acrylate, n-propyl acrylate, isopropyl acrylate, n-butyl acrylate, isobutyl acrylate, n-pentyl acrylate, n-hexyl acrylate, n-heptyl acrylate, n-octyl acrylate, and n-nonyl acrylate; and methacrylate esters such as ethyl methacrylate, n-propyl methacrylate, isopropyl methacrylate, n-butyl methacrylate, isobutyl methacrylate, n-pentyl methacrylate, n-hexyl methacrylate, n-heptyl methacrylate, n-octyl methacrylate, and n-nonyl methacrylate.

Among the above, n-butyl acrylate, n-pentyl acrylate, n-hexyl acrylate, n-heptyl acrylate, and n-octyl acrylate are preferable, and the n-butyl acrylate is particularly preferable. The (meth)acrylic acid ester can be used alone or a combination of two or more can be used. The content of the constituent unit derived from the (meth)acrylic acid ester is preferably 1 to 50 mass% or less of (B) the olefinic copolymer containing an epoxy group. By setting the above content to 1 mass% or more, the toughness in a low-temperature environment can be further enhanced. By setting the content to 50 mass% or less, the decrease in heat resistance can be suppressed. The lower limit may be 5 mass% or more, 10 mass% or more, 15 mass% or more, or 20 mass% or more. The upper limit may be 45 mass% or less, 40 mass% or less, 35 mass% or less, or 30 mass% or less. From thereamong, the content is more preferably 5 to 45 mass% or less, even more preferably 10 to 40 mass% or less, and particularly preferably 15 to 35 mass% or less.

In the present embodiment, the alcohol residue refers to an alcohol-derived site forming an ester bond of the (meth)acrylic acid ester.

The (B) olefinic copolymer containing an epoxy group can be manufactured by performing copolymerization by means of a conventionally known method. The olefinic copolymer described above can be obtained by performing copolymerization by means of a commonly well-known radical polymerization reaction. Any type of olefinic copolymer may be used, and the copolymer may be a random or block copolymer, for example.

The (B) olefinic copolymer containing an epoxy group used in the present embodiment can contain constituent units derived from other copolymer components to the extent that the effect is not impaired.

Examples of (B) the olefinic copolymer containing an epoxy group include an ethylene-glycidyl methacrylate-ethyl acrylate copolymer, an ethylene-glycidyl methacrylate-propyl acrylate copolymer, an ethylene-glycidyl methacrylate-butyl acrylate copolymer, an ethylene-glycidyl methacrylate-pentyl acrylate copolymer, an ethylene-glycidyl methacrylate-hexyl acrylate copolymer, an ethylene-glycidyl methacrylate-heptyl acrylate copolymer, an ethylene-glycidyl methacrylate-octyl acrylate copolymer, and the like. The following are preferable: an ethylene-glycidyl methacrylate-butyl acrylate copolymer, an ethylene-glycidyl methacrylate-pentyl acrylate copolymer, an ethylene-glycidyl methacrylate-hexyl acrylate copolymer, an ethylene-glycidyl methacrylate-heptyl acrylate copolymer, and an ethylene-glycidyl methacrylate-octyl acrylate copolymer. Among the above, an ethylene-glycidyl methacrylate-butyl acrylate copolymer is particularly preferable. Specific examples of an ethylene-glycidyl methacrylate-butyl acrylate copolymer include "LOTADER (Registered trademark) AX 8700" (manufactured by Arkema S.A.), "LOTADER (Registered trademark) AX 8750" (manufactured by Arkema S.A.), and the like.

The glass transition temperature of (B) the olefinic copolymer containing an epoxy group is preferably -40 °C or lower and more preferably -70 to - 40 °C from the viewpoint of enhancing toughness at low temperatures. It is preferable that the glass transition temperature of (C) the olefinic copolymer not containing an epoxy group be lower than the glass transition temperature of (B) the olefinic copolymer containing an epoxy group.

The content of (B) the olefinic copolymer containing an epoxy group of the PAS resin composition of the present embodiment will be described later.

### [(C) Olefinic copolymer not containing an epoxy group]

In the present embodiment, (C) the olefinic copolymer not containing an epoxy group contains the constituent unit derived from the α-olefin and the constituent unit derived from the (meth)acrylic acid ester. The content of the constituent unit derived from the (meth)acrylic acid ester relative to the olefinic copolymer not containing an epoxy group is 30 to 40 mass%.

Both of (C) the constituent unit derived from the α-olefin and the constituent unit derived from the (meth)acrylic acid ester contained in the olefinic copolymer not containing an epoxy group are same as those of (B) the olefinic copolymer not containing an epoxy group.

In (C) the olefinic copolymer not containing an epoxy group, the carbon number of the alcohol residue in the (meth)acrylic acid ester is 2 to 20. If the carbon number is less than 2, it is difficult to enhance toughness in a low-temperature environment, it is difficult to obtain a (meth)acrylic acid ester in which the carbon number of the alcohol residue is more than 20, and therefore an increase in the cost of raw materials is caused. The carbon number is preferably 4 to 10 and more preferably 4 to 8.

The content of the constituent unit derived from the (meth)acrylic acid ester relative to (C) the olefinic copolymer not containing an epoxy group is 30 to 40 mass%. If the content of the constituent unit is less than 30 mass%, it is difficult to enhance toughness in a low-temperature environment. If the content is more than 40 mass%, the handling property during pellet fabrication may deteriorate. The content of the constituent unit is preferably 31 to 39 mass% and more preferably 32 to 38 mass%.

Examples of (C) the olefinic copolymer not containing an epoxy group include an ethylene-ethyl acrylate copolymer, an ethylene-propyl acrylate copolymer, an ethylene-butyl acrylate copolymer, an ethylene-pentyl acrylate copolymer, an ethylene-hexyl acrylate copolymer, an ethylene-heptyl acrylate copolymer, an ethylene-octyl acrylate copolymer, and the like. The following are preferable: an ethylene-butyl acrylate copolymer, an ethylene-pentyl acrylate copolymer, an ethylene-hexyl acrylate copolymer, an ethylene-heptyl acrylate copolymer, and an ethylene-octyl acrylate copolymer. An ethylene-butyl acrylate copolymer is particularly preferable. A specific example of an ethylene-butyl acrylate copolymer is "LOTRYL (Registered trademark) 35BA40T" (manufactured by Arkema S.A.) or the like.

The glass transition temperature of (C) the olefinic copolymer not containing an epoxy group is preferably -50 °C or lower and more preferably -70 to - 50 °C from the viewpoint of enhancing toughness at low temperatures. As described above, it is preferable that the glass transition temperature of (C) the olefinic copolymer not containing an epoxy group be lower than the glass transition temperature of (B) the olefinic copolymer containing an epoxy group.

It is preferable that the constituent unit derived from the (meth)acrylic acid ester contained in (C) the olefinic copolymer not containing an epoxy group be the same as the constituent unit derived from the (meth)acrylic acid ester contained in (B) the olefinic copolymer containing an epoxy group. It is preferable that the constituent units derived from the (meth)acrylic acid esters in both (B) the olefinic copolymer containing an epoxy group and (C) the olefinic copolymer not containing an epoxy group be butyl acrylates, for example.

The PAS resin composition of the present embodiment contains the above (A) to (C) as resin components. The content of the resin component is 95 mass% or more, preferably 96 mass% or more, more preferably 97 mass% or more, and particularly preferably 98 mass% or more. The PAS resin composition of the present embodiment contains, as components other than the resin component, other components and/or fillers which will be described later.

Further, in the present embodiment, the total content of (B) the olefinic copolymer containing an epoxy group and (C) the olefinic copolymer not containing an epoxy group relative to 100 parts by mass of (A) the polyarylene sulfide resin is 33 to 55 parts by mass. If the total content is less than 33 parts by mass, it is difficult to enhance toughness in a low-temperature environment. If the total content is more than 55 parts by mass, problems may be caused such as venting-up during pellet fabrication performed by means of an extruder, bulges on the surface of a molded article, increase of gas components, and decrease in fluidity. The total content is preferably 37 to 55 parts by mass and more preferably 39 to 54 parts by mass.

Furthermore, the content of (C) the olefinic copolymer not containing an epoxy group relative to 100 parts by mass of (A) the polyarylene sulfide resin is 5 to 20 parts by mass. If the content of (C) the olefinic copolymer not containing an epoxy group is less than 5 parts by mass, it is difficult to enhance the toughness in a low-temperature environment. If the content is more than 20 parts by mass, the surface of the molded article may bulge or venting-up may occur during pellet fabrication performed by means of an extruder. The content of (C) the olefinic copolymer not containing an epoxy group is preferably 6 to 18 parts by mass and more preferably 7 to 15 parts by mass.

### [Other components]

The PAS resin composition of the present embodiment may contain various additives conventionally blended in a PAS resin, in addition to the above components, to the extent that the effect is not inhibited, in order to impart desired physical properties. Suitable examples of the additives include one or more selected from the group consisting of an antioxidant, a mold release agent, a corrosion inhibitor, and a nucleating agent. The use amount of the additives is not particularly limited as long as the ratio of the mass of the resin component relative to the total mass of the PAS resin composition is 95 mass% or more.

### [Filler]

The PAS resin composition of the present embodiment may contain a filler to the extent that the effect is not inhibited. In order to prevent the tensile fracture nominal strain of the PAS resin composition from decreasing, the content of the filler of the PAS resin composition is less than 5 mass%, preferably 3 mass% or less, more preferably 1 mass% or less, and particularly preferably 0 mass%. If the content of the filler is less than 5 mass%, the tensile fracture nominal strain measured in accordance with ISO 527-1,2 can be 20% or more.

Specific examples of the filler include: inorganic fibers such as glass fibers, carbon fibers, silica fibers, silica-alumina fibers, zirconia fibers, boron nitride fibers, boron fibers, potassium titanate fibers, and metal fibers (for example, stainless steel fibers, aluminum fibers, titanium fibers, copper fibers, brass fibers, and the like); organic fibers such as polyamide fibers, fluorine resin fibers, and acrylic resin fibers; powdery inorganic fillers such as silica, quartz powders, glass beads, glass powders, silicates (for example, calcium silicate, aluminum silicate, kaolin, talc, clay, diatomaceous earth, wollastonite, and the like), metal oxides (for example, iron oxide, titanium oxide, zinc oxide, alumina, and the like), carbonates (for example, calcium carbonate, magnesium carbonate, and the like), sulfates (for example, calcium sulfate, barium sulfate, and the like), silicon carbide, silicon nitride, boron nitride, and various metal powders; and plate-like fillers such as mica, glass flakes, and various metal foils. Two or more of these inorganic fillers can be used in combination.

### <Extrusion molded article/blow molded article>

The PAS resin composition of the present embodiment is preferably applied to an extrusion or blow molded article. The extrusion or blow molded article is manufactured by performing extrusion or blow molding using the PAS resin composition described above. Except for the use of the PAS resin composition described above as a material, the molded articles are similar to a general extrusion molded article.

A method of manufacturing an extrusion molded article is not particularly limited. Cylindrical piping is extrusion molded by using a die for tube, for example. If the extrusion molded article is piping, the piping may be multilayer or single-layer piping. Even if the piping is pushed into a pipe joint such as a nipple, cracking and tearing are unlikely to occur. Therefore, it is preferable that the piping be single-layer piping composed of the PAS resin composition described above.

As described above, the PAS resin composition of the present embodiment has excellent toughness at low temperatures. Therefore, it is preferable to apply an extrusion or blow molded article formed by using the PAS resin composition to cooling piping or the like. In addition, it is possible to reduce venting-up during pellet fabrication performed by using an extruder, it is possible to eliminate bulges or the like on the surface of a molded article obtained by means of extrusion or blow molding, and a good appearance can be obtained.

### [Examples]

Although the present embodiment will be described more specifically by using the following examples, the present embodiment is not limited to the following examples. Unless otherwise noted, commercial products were used for raw materials.

### [Examples 1 to 4 and Comparative Examples 1 to 12]

In each example and comparative example, each raw material component shown in Table 1 was dry-blended, then put into a twin-screw extruder with a cylinder temperature of 320 °C (glass fibers were added separately from a side-feeding section of the extruder), then the material was melt-kneaded and pelletized. In Table 1, numerical values for each component indicate parts by mass. Details of each raw material component used are shown below.

### (A) PAS resin (component (A))

. PPS resin 1: melt viscosity 130 Pa·s (shear rate: 1200 sec⁻¹, 310 °C), peak molecular weight: 65000
. PPS resin 2: PPS resin 1 described in Example 1 of JP 2006-63255 A, peak molecular weight: 41000

### (Measurement of melt viscosity of PPS resin)

The melt viscosity of the above PPS resin was measured as follows.

The melt viscosity was measured at a barrel temperature of 310 °C and a shear rate of 1200 sec⁻¹ by using a capirograph manufactured by Toyo Seiki Seisakusho, Ltd. and a flat die of 1 mmφ × 20 mmL as a capillary.

### (B) Olefinic copolymer containing an epoxy group (component (B))

. Olefinic copolymer containing an epoxy group 1: manufactured by Arkema S.A., LOTADERAX 8750, E 70% - GMA 5% - BA 25%, glass transition temperature: -45 °C
. Olefinic copolymer containing an epoxy group 2: manufactured by Arkema S.A., LOTADERAX 8700, E 67% - GMA 8% - BA 25%, glass transition temperature: -45 °C
. Olefinic copolymer containing an epoxy group 3: manufactured by Sumitomo Chemical Co., Ltd., BONDFAST 7M, E 67% - GMA 6% - MA 27%, glass transition temperature: -33 °C
. Olefinic copolymer containing an epoxy group 4: manufactured by Sumitomo Chemical Co., Ltd., BONDFAST 7L, E 70% - GMA 3% - MA 27%, glass transition temperature: -33 °C

In the above individual olefinic copolymers containing an epoxy group, "E" represents ethylene (a constituent unit derived from an α-olefin), "GMA" represents glycidyl methacrylate (a constituent unit derived from a glycidyl ester of an α,β-unsaturated acid), "BA" represents butyl acrylate (a constituent unit derived from a (meth)acrylic acid ester), and "MA" represents methyl acrylate. The percentage value given for each constituent unit indicates the mass percentage of each constituent unit. The same applies to (C) the olefinic copolymer not containing an epoxy group below.

### (C) Olefinic copolymer not containing an epoxy group (component (C))

. Olefinic copolymer not containing an epoxy group 1: manufactured by Arkema S.A., LOTRYL 35BA40T, E 65% - BA 35%, glass transition temperature: -55 °C
. Olefinic copolymer not containing an epoxy group 2: manufactured by DOW CHEMICAL JAPAN LIMITED, ENGAGE 8842, E-1-octene copolymer, glass transition temperature: -61 °C
. Olefinic copolymer not containing an epoxy group 3: manufactured by Mitsui Chemicals, Inc., TAFMER MH 7020, Maleic anhydride modified E-butene, glass transition temperature: -65 °C
. Olefinic copolymer not containing an epoxy group 4: manufactured by Arkema S.A., LOTRYL 29MA03, E 71% - MA 29%, glass transition temperature: -33 °C

**[Table 1]**

| | | Example 1 | Example 2 | Example 3 | Example 4 |
|---|---|---|---|---|---|
| Component (A) (parts by mass) | PPS resin 1 | 100 | 100 | 100 | 100 |
| Component (B) (parts by mass) | Olefinic copolymer containing an epoxy group 1 | 26.7 | 46.2 | - | 28.6 |
| | Olefinic copolymer containing an epoxy group 2 | - | - | 46.2 | - |
| Component (C) (parts by mass) | Olefinic copolymer not containing an epoxy group 1 | 6.7 | 7.7 | 7.7 | 14.3 |
| Total content of component (B) and component (C) | | 33.4 | 53.9 | 53.9 | 42.9 |
| -40 °C Charpy impact strength (with a notch) | | 26 | 31 | 32 | 36 |
| Tensile fracture nominal strain | | B | A | A | A |
| Bulging on surface of molded article | | A | A | A | B |
| Venting-up during pellet fabrication using extruder | | A | A | B | A |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Component (A) (parts by mass) | PPS resin 1 | 100 | 100 | 100 | 100 | 100 | 100 | 100 | 100 | 100 | 100 | 100 | - |
| | PPS resin 2 | - | - | - | - | - | - | - | - | - | - | - | 100 |
| Component (B) (parts by mass) | Olefinic copolymer containing an epoxy group 1 | 53.8 | - | 46.2 | 46.2 | 46.2 | 18.8 | 30.8 | - | - | 58.3 | 30.8 | 25.0 |
| | Olefinic copolymer containing an epoxy group 3 | - | - | - | - | - | - | - | 46.2 | - | - | - | - |
| | Olefinic copolymer containing an epoxy group 4 | - | - | - | - | - | - | - | - | 46.2 | - | - | - |
| Component (C) (parts by mass) | Olefinic copolymer not containing an epoxy group 1 | - | 53.8 | - | - | - | 6.3 | 7.7 | 7.7 | 7.7 | 8.3 | 23.1 | 6.3 |
| | Olefinic copolymer not containing an epoxy group 2 | - | - | 7.7 | - | - | - | - | - | - | - | - | - |
| | Olefinic copolymer not containing an epoxy group 3 | - | - | - | 7.7 | - | - | - | - | - | - | - | - |
| | Olefinic copolymer not containing an epoxy group 4 | - | - | - | - | 7.7 | - | - | - | - | - | - | - |
| Other (parts by mass) | Glass fiber | - | - | - | - | - | - | 15.4 | - | - | - | - | - |
| Total content of component (B) and component (C) | | 53.8 | 53.8 | 53.9 | 53.9 | 53.9 | 25.1 | 38.5 | 53.9 | 53.9 | 66.6 | 53.9 | 31.3 |
| -40 °C Charpy impact strength (with a notch) | | 22 | 28 | 24 | 23 | 23 | 21 | 27 | 12 | 10 | 40 | 44 | 19 |
| Tensile fracture nominal strain | | A | A | A | A | A | B | D | A | A | A | A | C |
| Bulging on surface of molded article | | A | D | B | B | A | A | A | B | B | A | D | A |
| Venting-up during pellet fabrication using extruder | | A | D | B | B | B | A | A | B | A | D | D | A |

### [Evaluation]

The following evaluation was performed by using obtained pellets of each example and each comparative example.

### (1) -40 °C Charpy impact strength (with a notch)

A Charpy impact test piece was molded in accordance with ISO 179/1eA at a cylinder temperature of 320 °C and a mold temperature of 150 °C by using an injection-molding machine, and after the test piece was left for one hour or longer in a predetermined temperature atmosphere, the Charpy impact strength (with a notch) was measured at -40 °C. The measurement results are shown in Tables 1 and 2.

If the Charpy impact strength is 25 kJ/m² or more, the toughness is high at low temperatures.

### (2) Tensile fracture nominal strain

A test piece (10 mm wide, 4 mm thick) was fabricated in accordance with ISO 3167 by means of injection-molding at a cylinder temperature of 320 °C and a mold temperature of 150 °C. By using this test piece, the tensile fracture nominal strain (%) was measured in accordance with ISO 527-1,2. If the tensile fracture nominal strain (%) was 100 or more, it was rated as "A", if the tensile fracture nominal strain was 50 or more and less than 100, it was rated as "B", if the tensile fracture nominal strain was 20 or more and less than 50, it was rated as "C", and if the tensile fracture nominal strain was less than 20, it was rated as "D". The evaluation results are shown in Tables 1 and 2.

### (3) Bulging on surface of molded article

A test piece was fabricated in accordance with ISO 3167 by means of injection-molding at a cylinder temperature of 320 °C and a mold temperature of 150 °C. The appearance of the test piece was visually observed, and if the number of bulging or peeling areas was zero, it was evaluated as "A", if the number of bulging or peeling areas was less than three, it was evaluated as "B", and if the number of bulging or peeling areas was three or more, it was evaluated as "D". The evaluation results are shown in Tables 1 and 2.

### (4) Venting-up during pellet fabrication performed by using extruder

A pellet was fabricated by means of extrusion using a twin-screw extruder at a cylinder temperature of 320 °C, a discharge rate of 20 kg/hr, and a screw rotation speed of 200 rpm. At the time of the above fabrication, if the resin did not leak from a vent hole near a die for 30 minutes or longer, it was evaluated as "A", if the resin leaked from the vent hole when the extrusion was continued for 10 minutes or longer and shorter than 30 minutes, it was evaluated as "B", and if the resin leaked from the vent hole in less than 10 minutes, it was evaluated as "D". The evaluation results are shown in Tables 1 and 2.

Observing Tables 1 and 2, all evaluation results of Examples 1 to 4 were satisfactory. That is, in all of the PAS resin compositions of Examples 1 to 4, the toughness at low temperatures was excellent, it was possible to suppress venting-up during pellet fabrication performed by means of an extruder, and it was possible to mold a molded article having a good appearance. Meanwhile, evaluation results of Comparative Examples 1 to 12 could not all be favorable at the same time. In Comparative Example 1 in which component (C) is not used, the toughness at low temperatures was poor, for example. In Comparative Example 2 in which component (B) is not used, venting-up during pellet fabrication performed by using the extruder was observed, and it was not able to obtain a molded article having a good appearance. In Comparative Examples 3 to 5 which differed from Example 2 only with regard to component (C), the toughness at low temperatures was poor. In addition, in Comparative Examples 6 and 12, in which the total content of components (B) and (C) was less than 33 parts by mass, the toughness at low temperatures was poor. In addition, in Comparative Example 7, in which glass fibers were added and the content of the resin component was less than 95 mass%, the tensile fracture nominal strain was poor. In Comparative Examples 8 and 9, in which a component containing methyl acrylate (the carbon number of an alcohol residue: 1) was used as a constituent unit of component (B), the toughness at low temperatures was poor. In Comparative Example 10, in which the total content of components (B) and (C) was more than 55 parts by mass, venting-up during pellet fabrication performed by means of an extruder was observed. Furthermore, in Comparative Example 11, in which the content of component (C) was more than 20 parts by mass, venting-up during pellet fabrication performed by means of an extruder was observed, and it was not possible to obtain a molded article having a good appearance.

## Claims

1. A polyarylene sulfide resin composition for extrusion or blow molding comprising:
(A) a polyarylene sulfide resin;
(B) an olefinic copolymer containing an epoxy group; and
(C) an olefinic copolymer not containing an epoxy group, as a resin component, wherein
a content of the resin component is 95 mass% or more,
a total content of (B) the olefinic copolymer containing an epoxy group and (C) the olefinic copolymer not containing an epoxy group relative to 100 parts by mass of (A) the polyarylene sulfide resin is 33 to 55 parts by mass, and a content of (C) the olefinic copolymer not containing an epoxy group relative to 100 parts by mass of (A) the polyarylene sulfide resin is 5 to 20 parts by mass, and
(B) the olefinic copolymer containing an epoxy group contains a constituent unit derived from an α-olefin, a constituent unit derived from a glycidyl ester of an α,β-unsaturated acid, and a constituent unit derived from a (meth)acrylic acid ester, and the number of carbons of an alcohol residue in the constituent unit derived from the (meth)acrylic acid ester is 2 to 20, and
(C) the olefinic copolymer not containing an epoxy group contains a constituent unit derived from an α-olefin and a constituent unit derived from a (meth)acrylic acid ester, the number of carbons of an alcohol residue in the constituent unit derived from the (meth)acrylic acid ester is 2 to 20, and a content of the constituent unit derived from the (meth)acrylic acid ester relative to (C) the olefinic copolymer not containing an epoxy group is 30 to 40 mass%.

2. The polyarylene sulfide resin composition for extrusion or blow molding according to claim 1, wherein
a content of (C) the olefinic copolymer not containing an epoxy group relative to 100 parts by mass of (A) the polyarylene sulfide resin is 6 to 20 parts by mass.

3. The polyarylene sulfide resin composition for extrusion or blow molding according to claim 1 or 2, wherein
(A) the polyarylene sulfide resin has a peak molecular weight of 50,000 or more, measured with a 0.05 mass% solution of the polyarylene sulfide resin in 1-chloronaphthalene by means of high-temperature gel permeation chromatography as the molecular weight of the peak top of the distribution of the molecular weight subjected to a standard polystyrene conversion.

4. The polyarylene sulfide resin composition for extrusion or blow molding according to any one of claims 1 to 3, wherein
a notched Charpy impact strength measured at -40 °C in accordance with ISO 179/1eA is 25 kJ/m² or more.

5. The polyarylene sulfide resin composition for extrusion or blow molding according to any one of claims 1 to 4, wherein
a tensile fracture nominal strain measured in accordance with ISO 527-1,2 is 20% or more.

6. The polyarylene sulfide resin composition for extrusion or blow molding according to any one of claims 1 to 5, further comprising:
one or more selected from the group consisting of an antioxidant, a mold release agent, a corrosion inhibitor, and a nucleating agent.

7. The polyarylene sulfide resin composition for extrusion or blow molding according to any one of claims 1 to 6, wherein
in the olefinic copolymer containing an epoxy group (B) the number of carbons of the alcohol residue in the constituent unit derived from the (meth)acrylic acid ester is 4 to 10.

8. The polyarylene sulfide resin composition for extrusion or blow molding according to claim 7, wherein
the olefinic copolymer not containing an epoxy group (C) is selected from ethylene-ethyl acrylate copolymer, ethylene-propyl acrylate copolymer, ethylene-butyl acrylate copolymer, ethylene-pentyl acrylate copolymer, ethylene-hexyl acrylate copolymer, ethylene-heptyl acrylate copolymer, or ethylene-octyl acrylate copolymer.

## Patentansprüche

1. Polyarylensulfid-Harzzusammensetzung für die Extrusion oder das Blasformen, umfassend:
(A) ein Polyarylensulfidharz;
(B) ein olefinisches Copolymer, das eine Epoxygruppe enthält; und
(C) ein olefinisches Copolymer, das keine Epoxygruppe enthält, als eine Harzkomponente, wobei
der Gehalt der Harzkomponente 95 Masse-% oder mehr beträgt,
ein Gesamtgehalt an (B) dem olefinischen Copolymer, das eine Epoxygruppe enthält, und (C) dem olefinischen Copolymer, das keine Epoxygruppe enthält, bezogen auf 100 Masseteile (A) des Polyarylensulfidharzes 33 bis 55 Masseteile beträgt, und ein Gehalt an (C) dem olefinischen Copolymer, das keine Epoxygruppe enthält, bezogen auf 100 Masseteile (A) des Polyarylensulfidharzes 5 bis 20 Masseteile beträgt, und
(B) das olefinische Copolymer, das eine Epoxygruppe enthält, einen von einem α-Olefin abgeleiteten Baustein, einen von einem Glycidylester einer α,β-ungesättigten Säure abgeleiteten Baustein und einen von einem (Meth)acrylsäureester abgeleiteten Baustein enthält und die Anzahl der Kohlenstoffe eines Alkoholrestes in dem von dem (Meth)acrylsäureester abgeleiteten Baustein 2 bis 20 beträgt, und
(C) das olefinische Copolymer, das keine Epoxygruppe enthält, eine von einem α-Olefin abgeleitete Aufbaueinheit und eine von einem (Meth)acrylsäureester abgeleitete Aufbaueinheit enthält, die Anzahl der Kohlenstoffe eines Alkoholrestes in der von dem (Meth)acrylsäureester abgeleiteten Aufbaueinheit 2 bis 20 beträgt und der Gehalt der von dem (Meth)acrylsäureester abgeleiteten Aufbaueinheit, bezogen auf (C), das olefinische Copolymer, das keine Epoxygruppe enthält, 30 bis 40 Masse-% beträgt.

2. Polyarylensulfid-Harzzusammensetzung für die Extrusion oder das Blasformen gemäß Anspruch 1, wobei
ein Gehalt an (C) dem olefinischen Copolymer, das keine Epoxygruppe enthält, bezogen auf 100 Masseteile (A) des Polyarylensulfidharzes 6 bis 20 Masseteile beträgt.

3. Polyarylensulfid-Harzzusammensetzung für die Extrusion oder das Blasformen gemäß Anspruch 1 oder 2, wobei
(A) das Polyarylensulfidharz ein Peak-Molekulargewicht von 50.000 oder mehr aufweist, gemessen mit einer 0,05 massenprozentigen Lösung des Polyarylensulfidharzes in 1-Chlornaphthalin mittels Hochtemperatur-Gelpermeationschromatographie als das Molekulargewicht der Peakspitze der Verteilung des Molekulargewichts, das einer Standard-Polystyrolumwandlung unterzogen wurde.

4. Polyarylensulfid-Harzzusammensetzung für die Extrusion oder das Blasformen gemäß einem der Ansprüche 1 bis 3, wobei
eine bei -40 °C nach ISO 179/1eA gemessene Kerbschlagzähigkeit nach Charpy 25 kJ/m² oder mehr beträgt.

5. Polyarylensulfid-Harzzusammensetzung für die Extrusion oder das Blasformen nach einem der Ansprüche 1 bis 4, wobei
eine nach ISO 527-1,2 gemessene Zugbruch-Nenndehnung 20 % oder mehr beträgt.

6. Polyarylensulfid-Harzzusammensetzung für die Extrusion oder das Blasformen gemäß einem der Ansprüche 1 bis 5, ferner umfassend:
eines oder mehrere aus der Gruppe bestehend aus einem Antioxidationsmittel, einem Formtrennmittel, einem Korrosionsinhibitor und einem Keimbildner.

7. Polyarylensulfid-Harzzusammensetzung für die Extrusion oder das Blasformen gemäß einem der Ansprüche 1 bis 6, wobei
in dem olefinischen Copolymer (B), das eine Epoxygruppe enthält, die Anzahl der Kohlenstoffe des Alkoholrestes in der vom (Meth)acrylsäureester abgeleiteten Einheit 4 bis 10 beträgt.

8. Polyarylensulfid-Harzzusammensetzung für die Extrusion oder das Blasformen gemäß Anspruch 7, wobei
das olefinische Copolymer (C), das keine Epoxygruppe enthält, ausgewählt ist aus Ethylen-Ethylacrylat-Copolymer, Ethylen-Propylacrylat-Copolymer, Ethylen-Butylacrylat-Copolymer, Ethylen-Pentylacrylat-Copolymer, Ethylen-Hexylacrylat-Copolymer, Ethylen-Heptylacrylat-Copolymer oder Ethylen-Octylacrylat-Copolymer.

## Revendications

1. Composition de résine de sulfure de polyarylène pour extrusion ou moulage par soufflage comprenant :
(A) une résine de sulfure de polyarylène ;
(B) un copolymère oléfinique contenant un groupe époxy ; et
(C) un copolymère oléfinique ne contenant pas de groupe époxy, en tant que composant de résine, dans laquelle
une teneur du composant de résine est de 95 % en masse ou plus,
une teneur totale de (B) copolymère oléfinique contenant un groupe époxy et (C) copolymère oléfinique ne contenant pas de groupe époxy par rapport à 100 parties en masse de (A) résine de sulfure de polyarylène est de 33 à 55 parties en masse, et une teneur de (C) copolymère oléfinique ne contenant pas de groupe époxy par rapport à 100 parties en masse de (A) résine de sulfure de polyarylène est de 5 à 20 parties en masse, et
(B) le copolymère oléfinique contenant un groupe époxy contient un motif constitutif dérivé d'une α-oléfine, un motif constitutif dérivé d'un ester de glycidyle d'un acide α,β-insaturé, et un motif constitutif dérivé d'un ester d'acide (méth)acrylique, et le nombre de carbones d'un résidu alcool dans le motif constitutif dérivé de l'ester d'acide (méth)acrylique est de 2 à 20, et
(C) le copolymère oléfinique ne contenant pas de groupe époxy contient un motif constitutif dérivé d'une α-oléfine et un motif constitutif dérivé d'un ester d'acide (méth)acrylique, le nombre de carbones d'un résidu alcool dans le motif constitutif dérivé de l'ester d'acide (méth)acrylique est de 2 à 20, et une teneur du motif constitutif dérivé de l'ester d'acide (méth)acrylique par rapport à (C) le copolymère oléfinique ne contenant pas de groupe époxy est de 30 à 40 % en masse.

2. Composition de résine de sulfure de polyarylène pour extrusion ou moulage par soufflage selon la revendication 1, dans laquelle
une teneur de (C) copolymère oléfinique ne contenant pas de groupe époxy par rapport à 100 parties en masse de (A) résine de sulfure de polyarylène est de 6 à 20 parties en masse.

3. Composition de résine de sulfure de polyarylène pour extrusion ou moulage par soufflage selon la revendication 1 ou 2, dans laquelle
(A) la résine de sulfure de polyarylène présente un poids moléculaire de pic de 50 000 ou plus, mesuré avec une solution à 0,05 % en masse de la résine de sulfure de polyarylène dans le 1-chloronaphtalène au moyen d'une chromatographie par perméation sur gel à haute température en tant que poids moléculaire du sommet de la répartition du poids moléculaire soumis à une conversion par étalon de polystyrène.

4. Composition de résine de sulfure de polyarylène pour extrusion ou moulage par soufflage selon l'une des revendications 1 à 3, dans laquelle
une résistance au choc Charpy sur éprouvette entaillée mesurée à -40 °C conformément à l'ISO 179/1eA est de 25 kJ/m² ou plus.

5. Composition de résine de sulfure de polyarylène pour extrusion ou moulage par soufflage selon l'une des revendications 1 à 4, dans laquelle
une contrainte nominale de rupture par traction mesurée conformément à l'ISO 527-1,2 est de 20 % ou plus.

6. Composition de résine de sulfure de polyarylène pour extrusion ou moulage par soufflage selon l'une des revendications 1 à 5, comprenant en outre :
un ou plusieurs éléments sélectionnés parmi le groupe consistant en un antioxydant, un agent de démoulage, un inhibiteur de corrosion et un agent de nucléation.

7. Composition de résine de sulfure de polyarylène pour extrusion ou moulage par soufflage selon l'une des revendications 1 à 6, dans laquelle
dans le copolymère oléfinique contenant un groupe époxy (B), le nombre de carbones du résidu alcool dans le motif constitutif dérivé de l'ester d'acide (méth)acrylique est de 4 à 10.

8. Composition de résine de sulfure de polyarylène pour extrusion ou moulage par soufflage selon la revendication 7, dans laquelle
le copolymère oléfinique ne contenant pas de groupe époxy (C) est sélectionné parmi un copolymère d'éthylène-acrylate d'éthyle, un copolymère d'éthylène-acrylate de propyle, un copolymère d'éthylène-acrylate de butyle, un copolymère d'éthylène-acrylate de pentyle, un copolymère d'éthylène-acrylate d'hexyle, un copolymère d'éthylène-acrylate d'heptyle ou un copolymère d'éthylène-acrylate d'octyle.
